# EUROPÄISCHE PATENTANMELDUNG

(11) **EP 0 872 384 A2**
(43) Veröffentlichungstag der Anmeldung: **21.10.1998**
(21) Anmeldenummer: 98105802.7
(22) Anmeldetag: 30.03.1998
(51) Int. Cl.: B60R 13/02

(54) **Dachhimmel für einen Innenraum eines Kraftfahrzeugs**

(30) Priorität: 15.04.1997 DE 29706751 U
(71) Anmelder: FER Fahrzeugelektrik GmbH, 99819 Eisenach (DE)
(72) Erfinder: Tietze, Martin, Ing, 99817 Eisenach (DE); Götte, Hans-Dieter, 99819 Grossenlupnitz (DE); Zellmann, Peter, 99831 Creuzburg (DE)
(74) Vertreter: Strasser, Wolfgang, Dipl.-Phys

(57) **Zusammenfassung**

Bei einem Dachhimmel (1) für einen Innenraum eines Kraftfahrzeugs mit einer an eine Innenseite eines Fahrzeugdaches flächig anpaßbaren Formschale (2), die mittels Befestigungselementen an dem Fahrzeugdach festlegbar ist, sowie mit mehreren, am Dachhimmel angeordneten Funktionselementen (6 bis 20), die zumindest teilweise als elektrisch und/oder elektronisch betätigbare Baueinheiten gestaltet sind, wobei die elektrisch und/oder elektronisch betätigbaren Baueinheiten mittels Übertragungskabeln (S_{V}, S_{H}, S_{Z}) an wenigstens ein fahrzeugfestes Bordnetz anschließbar sind, werden zur Verminderung des Herstellungs- und Montageaufwandes für alle Funktionselemente Aufnahmen zur Integration der Funktionselemente in der Formschale vorgesehen.

## Beschreibung

Die Erfindung betrifft einen Dachhimmel für einen Innenraum eines Kraftfahrzeugs mit einer an eine Innenseite eines Fahrzeugdaches flächig anpaßbaren Formschale, die mittels Befestigungselementen an dem Fahrzeugdach festlegbar ist, sowie mit mehreren, am Dachhimmel angeordneten Funktionselementen, die zumindest teilweise als elektrisch und/oder elektronisch betätigbare Baueinheiten gestaltet sind, wobei die elektrisch und/oder elektronisch betätigbaren Baueinheiten mittels Übertragungskabeln an wenigstens ein fahrzeugfestes Bordnetz anschließbar sind.

Ein Dachhimmel für einen Innenraum eines Personenkraftwagens ist allgemein bekannt. Der Dachhimmel weist eine aus einem Kunststoffschaum hergestellte Formschale auf, die mittels mehrerer Befestigungselemente an einer Unterseite des Fahrzeugdaches insbesondere im Bereich der seitlichen Dachholme festlegbar ist. Die bekannte Formschale wird im Bereich von Befestigungspunkten von innenraumseitigen Haltegriffen an den Dachholmen festgelegt, wobei die Festlegung der Formschale durch die Befestigung der Haltegriffe an den Dachholmen erfolgt. Verschiedene Funktionselemente im Bereich des Dachhimmels wie Sonnenblenden, Rückspiegel, Innenraumleuchten und ähnliches sind entweder direkt am Fahrzeugdach befestigt oder werden in der am Fahrzeugdach montierten Position der Formschale mit dieser verbunden. Entsprechend benötigte Stromversorgungs- oder Datenübertragungskabel sind entlang der Dachholme verlegt und werden einzeln am Fahrzeugdach entlang zu den jeweiligen Funktionselementen geführt. Die Montage und Inbetriebsetzung des Dachhimmels einschließich der Formschale sowie der verschiedenen Funktionselemente erfordert somit einen erheblichen Aufwand.

Aufgabe der Erfindung ist es, einen Dachhimmel der eingangs genannten Art zu schaffen, der mit wesentlich reduziertem Aufwand herstellbar und im Fahrzeug montierbar ist.

Diese Aufgabe wird dadurch gelöst, daß für alle Funktionselemente Aufnahmen zur Integration der Funktionselemente in der Formschale vorgesehen sind. Dadurch ist es möglich, die Formschale komplett vorzumontieren und als vormontierte Baueinheit zusammen mit allen Funktionselementen am Fahrzeugdach festzulegen. Der Herstellungs- und Montageaufwand für den Dachhimmel wird dadurch erheblich reduziert.

In Ausgestaltung der Erfindung sind die Übertragungskabel an einer dem Fahrzeugdach zugewandten Oberseite der Formschale entlang definierter Führungsbahnen verlegt und zu einem zentralen Anschlußteil zusammengeführt, das mit einem fahrzeugseitigen, mit dem wenigstens einen Bordnetz verbundenen korrespondierenden zentralen Anschlußteil verbindbar ist. Als Übertragungskabel im Sinne der Erfindung werden sowohl Energieversorgungskabel als auch Datenübertragungskabel wie Signalleitungen und ähnliches angesehen. Durch die geführte und gebündelte Verlegung der Übertragungskabel an der Oberseite der Formschale ist es möglich, auch die gesamte Verkabelung der Funktionselemente im Bereich der Formschale bereits zu vervollständigen, so daß bei der Montage der Formschale an der Unterseite des Fahrzeugdaches lediglich noch durch die Verbindung der zentralen Anschlußteile in einem einzigen Montageschritt das elektrische oder elektronische Anschließen der Funktionselemente der Formschale erfolgt. Als Führungsbahnen können entsprechende Vertiefungen, Nuten oder ähnliches vorgesehen sein, wobei den Führungsbahnen auch Befestigungsmittel zur Sicherung der verlegten Position der Übertragungskabel zugeordnet sind. Die Verlegung der bordseitigen Übertragungskabel in den Dachholmen und die jeweils einzelne Führung zu den Funktionselementen hin entfällt vorteilhaft bei der erfindungsgemäßen Lösung. Vorzugsweise ist die Verbindungsstelle zwischen den zentralen Anschlußteilen des Bordnetzes und der Verkabelung der Formschale im Bereich einer seitlichen Tragsäule, insbesondere im Bereich der A-Säule vorgesehen.

In weiterer Ausgestaltung der Erfindung sind die korrespondierenden Anschlußteile als lösbare Steckverbindung gestaltet. Dadurch ist eine besonders einfache Montage und Demontage ohne die Zuhilfenahme von Werkzeugen möglich.

In weiterer Ausgestaltung der Erfindung sind als Funktionselemente wenigstens zwei Haltegriffe an der Formschale befestigt. Die Haltegriffe dienen somit nicht mehr - wie beim Stand der Technik - zur Festlegung der Formschale am Fahrzeugdach, sondern können bereits während der Vormontage an der Formschale festgelegt werden.

In weiterer Ausgestaltung der Erfindung sind als Funktionselemente Luftführungskanäle einschließlich Austrittsdüsen einer fahrzeugseitigen Heizungs- oder Klimaanlage in der Formschale integriert. Die Luftführungskanäle können analog der Anschlußteile für die Übertragungskabel über entsprechende Kanalkupplungen mit den bordseitigen Luftführungskanälen im montierten Zustand der Formschale verbunden werden.

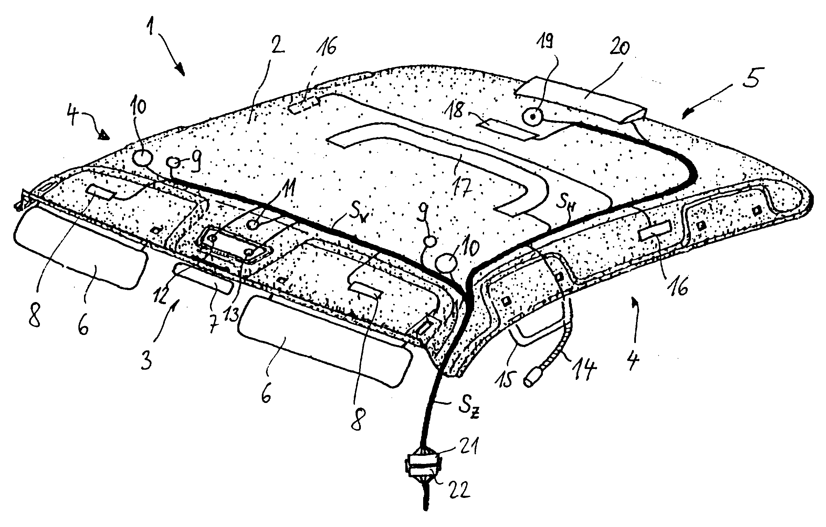

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnung dargestellt ist.

Die einzige Zeichnung zeigt in perspektivischer Darstellung eine Ausführungsform eines erfindungsgemäßen Dachhimmels.

Ein Dachhimmel 1 weist gemäß der einzigen Zeichnung eine aus einem formstabilen Kunststoffschaum einteilig hergestellte Formschale 2 auf, die sich über die gesamte Länge und Breite eines nicht dargestellten Fahrzeugdaches eines Innenraumes eines Personenkraftwagens in Form einer Großraumlimousine erstreckt. Entsprechend der Form des Fahrzeugdaches ist die Formschale 2 in den gegenüberliegenden Seitenbereichen 4 nach unten gekrümmt. In der Formschale 2 ist eine Vielzahl von nachfolgend näher beschriebenen Funktionselementen integriert, die einerseits dem Fahrzeugkomfort und andererseits Fahrzeugfunktionen zugeordnet sind.

An einer Vorderseite 3 der Formschale 2, die im montierten Zustand mit einer Windschutzscheibe des Kraftfahrzeugs abschließt, sind an einer Unterseite der Formschale 2 Aufnahmen zur schwenkbeweglichen Lagerung von zwei Sonnenblenden 6 vorgesehen. Zwischen den beiden Sonnenblenden 6 ist eine Aufnahme für einen Rückspiegel 7 vorgesehen. Unmittelbar an den Rückspiegel 7 anschließend ist eine Aufnahme in der Formschale 2 für ein Gehäuse einer zentralen Innenraumleuchte vorgesehen, wobei der Aufnahme zusätzlich Halterungen für die Positionierung eines Sensors 13 für eine Innenraumüberwachung einer Diebstahlwarnanlage des Fahrzeugs sowie ein Freisprechmikrofon 12 einer Telekommunikationsanlage des Fahrzeugs positioniert sind. Nach hinten zu einer Rückseite 5 der Formschale 2 hin an die Aufnahme für die zentrale Innenraumleuchte anschließend ist eine Aufnahme für eine Kamera 11 vorgesehen, die ebenfalls zur Innenraumüberwachung dient. Im Bereich von schalenartigen Vertiefungen für die Lagerung der Sonnenblenden 6 in ihrer Ruheposition ist an der Formschale 2 jeweils eine Schminkleuchte 8 vorgesehen. Außerdem sind im vorderen Bereich der Formschale 2 auf zwei gegenüberliegenden Seiten noch Aufnahmen für Lautsprecher 10 sowie für als Luftaustrittsdüsen von Luftführungskanälen dienende Klimadüsen 9 vorgesehen. Die Klimadüsen 9 sind elektrisch betätigbar und sind an eine entsprechende elektrische Leitung angeschlossen. Auch zu den Lautsprechern 10, zu den Schminkleuchten 8 und zu der Kamera 11 führt jeweils eine elektrische Leitung. Zu dem Freisprechmikrofon 12 und zu dem Sensor 13 führt eine Datenübertragungsleitung, wobei die genannten elektrischen Leitungen und die Datenübertragungsleitungen zu einem Kabelsatz S_{V} zusammengeführt sind, der quer zur Fahrzeuglängsrichtung auf der Oberseite der Formschale 2 zur Seite der Formschale 2 hin verlegt ist.

In einem mittleren Bereich der Formschale 2 ist eine als Kaltkathodenleuchte gestaltete, U-förmige Fondleuchte 17 vorgesehen. Auch für diese Fondleuchte 17 ist eine entsprechende U-förmige Aufnahme in der Formschale 2 vorgesehen. In Abstand hinter der Fondleuchte 17 ist eine Laderaumleuchte 18 in der Formschale 1 integriert. Hinter dieser Laderaumleuchte ist an einer Oberseite der Formschale 2 ein Antennensteckkontakt 19 vorgesehen. An der Rückseite 5 der Formschale 1 ist eine Aufnahme zur Festlegung eines Gehäuses 20 für eine Bremsleuchte vorgesehen, die als dritte, hochgesetzte Bremsleuchte dient. Sowohl zu der Bremsleuchte 20 als auch zu der Laderaumleuchte 8 hin und zu der Fondleuchte 17 ist jeweils ein elektrisches Kabel geführt. Zu dem Antennensteckkontakt 19 ist ein Datenübertragungskabel in Form eines Antennenkabels geführt. In den Seitenbereichen 4 der Formschale 1 sind zudem Fondseitenleuchten 16 integriert, die ebenfalls über elektrische Kabel angeschlossen sind. Alle diese elektrischen Kabel sowie das Datenübertragungskabel des Antennensteckkontaktes 19 sind zu einem weiteren Kabelsatz S_{H} zusammengeführt, der an einer Oberseite der Formschale 1 auf einer Seite in Fahrzeuglängsrichtung bis zu dem anderen Kabelsatz S_{V} nach vorne geführt ist. In dem vorderen Bereich der Formschale 1 sind die beiden Kabelsätze S_{V} und S_{H} zu einem Zentralkabelsatz S_{Z} zusammengeführt, der in einen zentralen Anschlußkontakt 21 mündet. Dem zentralen Anschlußkontakt 21 ist ein korrespondierendes Anschlußteil 22 zugeordnet, das als zentraler Anschlußkontakt für die bordseitigen Datenübertragungs- und Energieversorgungskabel dient. Über den Steckkontakt zwischen den Anschlußteilen 21 und 22 wird somit in einfacher Weise ein Anschluß an die fahrzeugseitigen Energieversorgungs- bzw. Datenübertragungsnetze erzielt.

An den Seitenbereichen 4 der Formschale 1 sind Aufnahmen zur Festlegung von Haltegriffen 15 vorgesehen.

Der Dachhimmel 1 ist somit komplett vormontierbar, indem in die Formschale 2 die verschiedenen Funktionselemente integriert oder an dieser festgelegt werden und anschließend für die elektrischen und elektronischen Funktionselemente die entsprechende Verkabelung durchgeführt wird. Diese vormontierte und verkabelte Einheit des Dachhimmels 1 kann dann in einfacher Weise an der Unterseite des Fahrzeugdaches festgelegt und durch die Steckverbindung im Bereich der zentralen Anschlußteile 21 und 22 auch die Kontaktierung der jeweiligen fahrzeugseitigen Netze hergestellt werden.

## Patentansprüche

1. Dachhimmel für einen Innenraum eines Kraftfahrzeugs mit einer an eine Innenseite eines Fahrzeugdaches flächig anpaßbaren Formschale, die mittels Befestigungselementen an dem Fahrzeugdach festlegbar ist, sowie mit mehreren, am Dachhimmel angeordneten Funktionselementen, die zumindest teilweise als elektrisch und/oder elekronisch betätigbare Baueinheiten gestaltet sind, wobei die elektrisch und/oder elektronisch betätigbaren Baueinheiten mittels Übertragungskabeln an wenigstens ein fahrzeugfestes Bordnetz anschließbar sind,
**dadurch gekennzeichnet,**
daß für alle Funktionselemente (6 bis 20) Aufnahmen zur Integration der Funktionselemente (6 bis 20) in der Formschale (2) vorgesehen sind.

2. Dachhimmel nach Anspruch 1, dadurch gekennzeichnet, daß die Übertragungskabel (S_{V}, S_{H}, S_{Z}) an einer dem Fahrzeugdach zugewandten Oberseite der Formschale (2) entlang definierter Führungsbahnen verlegt und zu einem zentralen Anschlußteil (21) zusammengeführt sind, das mit einem fahrzeugseitigen, mit dem wenigstens einen Bordnetz verbundenen, korrespondierenden zentralen Anschlußteil (22) verbindbar ist.

3. Dachhimmel nach Anspruch 2, dadurch gekennzeichnet, daß die korrespondierenden Anschlußteile (21, 22) als lösbare Steckverbindung gestaltet sind.

4. Dachhimmel nach einem der vorhergehenden Ansprüche, dadurch gekennzeichnet, daß als Funktionselemente wenigstens zwei Haltegriffe (15) an der Formschale (2) befestigt sind.

5. Dachhimmel nach wenigstens einem der vorhergehenden Ansprüche, dadurch gekennzeichnet, daß als Funktionselemente Luftführungskanäle einschließlich Austrittsdüsen (9) einer fahrzeugseitigen Heizungs- oder Klimaanlage in der Formschale (2) integriert sind.
